(19) Europäisches Patentamt
European Patent Office
Office européen des brevets

(11) Veröffentlichungsnummer: **0 214 635 A2**

(12) # EUROPÄISCHE PATENTANMELDUNG

(21) Anmeldenummer: 86112359.4

(22) Anmeldetag: 06.09.86

(51) Int. Cl.⁴: **B05D 7/02**, B05D 7/04, B05D 3/10, B05D 5/10, C08J 7/12

(30) Priorität: 09.09.85 DE 3532086

(43) Veröffentlichungstag der Anmeldung: 18.03.87 Patentblatt 87/12

(84) Benannte Vertragsstaaten: AT BE CH DE FR GB IT LI LU NL SE

(71) Anmelder: LOHMANN GmbH & CO KG
Irlicher Strasse 55
D-5450 Neuwied 12(DE)

(72) Erfinder: Milker, Roland, Dr. Dipl.-Chem.
Finkenweg 14
D-5457 Oberhonnefeld(DE)
Erfinder: Ruppert, Ingo, Dr. Dipl.-Chem.
Gerhard-Domagk-strasse 1
D-5300 Bonn 1(DE)

(74) Vertreter: Reitzner, Bruno, Dr. et al
Patentanwälte Dipl.-Ing. R. Splanemann Dr. B. Reitzner Tal 13
D-8000 München 2(DE)

(54) **Verfahren zur Oberflächenbehandlung von flächigem Kunststoffmaterial.**

(57) Verfahren zur Oberflächenbehandlung von flächigem Kunststoffmaterial mit glasförmigem Fluor, wobei ein bahnförmiges Kunststoffmaterial in Form von Folien oder Schaumstoffen kontinuierlich und freitragend durch eine mit einer verdünnten Fluoratmosphäre gefüllte Reaktionskammer geleitet wird. Man fluoriert so lange, bis die Oberflächenenergie des Kunststoffmaterials mindestens 45 mN/m beträqt. Ferner wird ein Austausch der verdünnten Fluoratmosphäre in der Reaktionskammer mit der äußeren Atmosphäre weitgehend verhindert.

EP 0 214 635 A2

Fig. 1

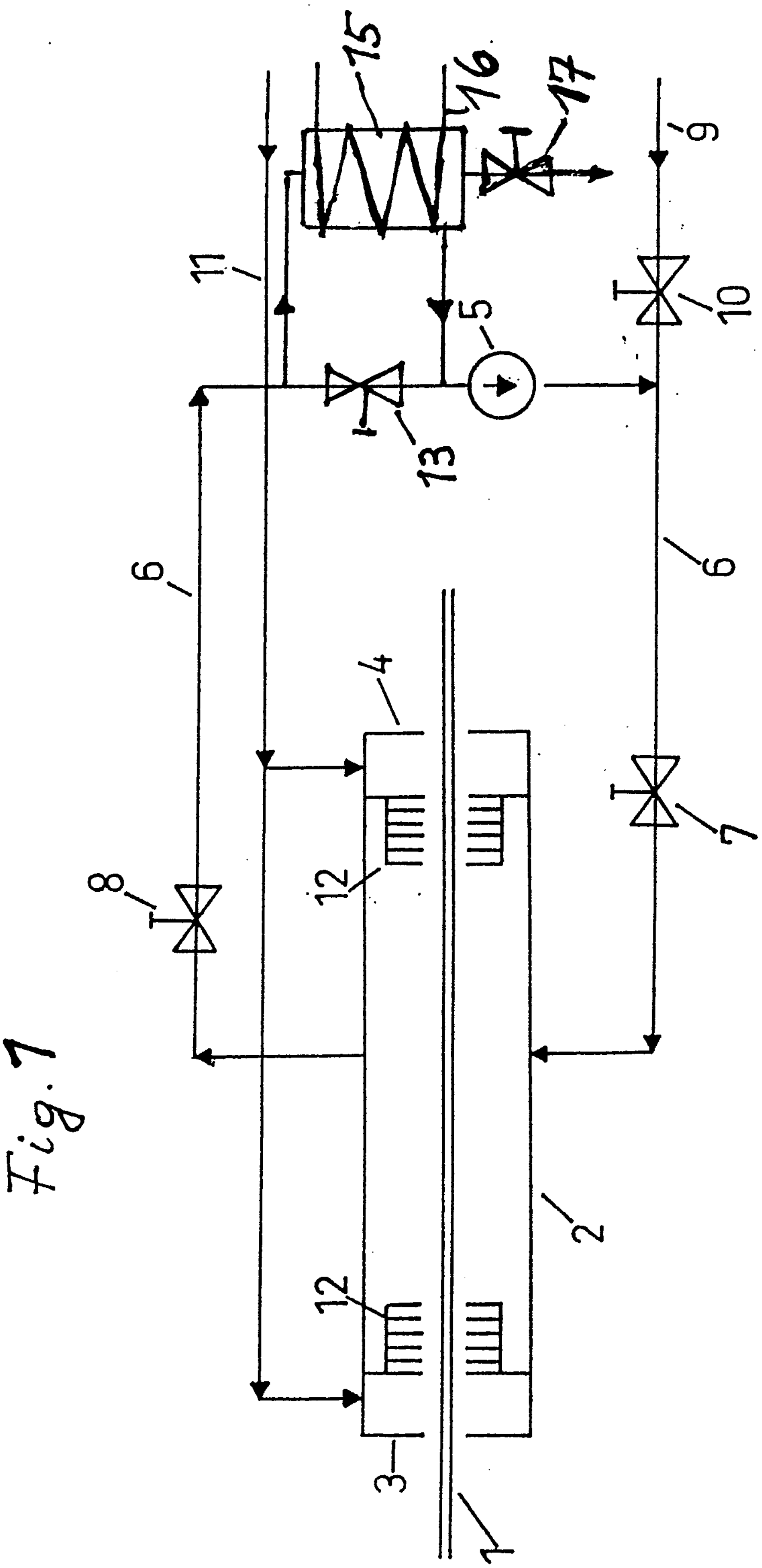

Die Erfindung betrifft ein Verfahren zur Oberflächenbehandlung von flächigem Kunststoffmaterial, wobei das Kunststoffmaterial kontinuierlich durch eine mit einer verdünnten Fluoratmosphäre gefüllte Reaktionskammer geleitet wird.

Die Vorbehandlung von Substratoberflächen bildet insbesondere bei unpolaren polymeren Materialien die Voraussetzung für die Haftung. Eine gute Haftung verlangen die Fertigungsprozesse Kleben, Beschichten, Laminieren, Lackieren und Drucken. Das gegenseitige Bindevermögen von zwei Stoffen hängt von verschiedenen Faktoren ab. Zu den wichtigsten Faktoren gehört der polare Charakter der Oberfläche, welcher mechanische und besonders chemische Bindungen ermöglicht. Aus diesem Grund werden polymere Materialien unter Anwendung von Oxidationsprozessen behandelt.

Zu diesen Prozessen gehört u.a. die Behandlung mit gasförmigem Fluor, mit Ozon sowie die Behandlung durch Coronaentladung.

Zwischen einer Behandlung mit Ozon und einer Behandlung durch Corona-Entladung bestehen fließende Übergänge, da das Ozon in einem Ozonisator durch elektrische Entladung erzeugt werden muß. Umgekehrt entsteht bei einer typischen Corona-Entladung in einer sauerstoffhaltigen Atmosphäre in geringen Mengen Ozon, wodurch die polymere Oberfläche zusätzlich chemisch aktiviert wird.

Die Ozonbehandlung ist mit einem hohen Überwachungs-und Wartungsaufwand verbunden, während die Vorbehandlung durch eine Coronaentladung hohe Investitionen bedingt und sehr störanfällig ist. Es kommt im Bereich des Dielektrikums häufig zu Bränden, die Kurzschlüsse in der Vorbehandlungsstation nach sich ziehen. Außerdem kann nur eine Seite eines bahnförmigen Materials durch die Coronaentladung aktiviert werden.

Ein Verfahren zur Oberflächenbehandlung von Kunststoffmaterial mit gasförmigem Fluor ist beispielsweise aus der DE-PS 26 44 508 bekannt. Bei diesem Verfahren können neben dreidimensionalen Gegenständen wie Flaschen, auch Flächengebilde, wie Kunststoffolien aus Polyäthylen, fluoriert werden. Die Fluorierung erfolgt hier in einer geschlossenen Reaktionskammer. Wenn nach dem Einfüllen des Behandlungsgutes ein fluorhaltiges Gas eingeleitet wird, so ist die Fluorkonzentration an den Einleitungsstellen höher als an den anderen Stellen, so daß das Behandlungsgut nicht gleichmäßig einer Atmosphäre mit konstanter Fluorkonzentration ausgesetzt ist, wodurch unterschiedliche Oberflächeneigenschaften erhalten werden. Außerdem gelangt das gasförmige Fluor beim Öffnen der Reaktionskammer in die Atmosphäre und stellt somit eine Umweltbelastung dar. Schließlich sind die Durchsatzzeiten wegen der diskontinuierlichen Arbeitsweise verhältnismäßig lang.

Man hat versucht, diesen Nachteil nach der US-PS 42 96 151 dadurch zu vermeiden, daß man das Kunststoffmaterial, z.B. Folien aus Polyäthylen und Styrol-Butadien-Copolymeren kontinuierlich auf einem Förderband durch eine mit einer verdünnten Fluoratmosphäre gefüllte Reaktionskammer leitete. Dieses Verfahren hat jedoch den Nachteil, daß das flächige Kunststoffmaterial nicht gleichmäßig mit dem Fluor reagiert, da das Fluor nicht so leicht an die auf dem Förderband liegende Oberfläche des bahnförmigen Kunststoffmaterials gelangen kann wie auf die freiliegende Oberfläche. Infolge dieser Diffusionshemmung werden die Oberflächen unterschiedlich stark fluoriert. Außerdem ist auch das Förderband dem Angriff des Fluors ausgesetzt, so daß hierfür ein gegenüber dem Fluor beständiges Material verwendet werden muß, das in der Regel sehr kostspielig ist. Schließlich sind bei dem bekannten Verfahren keine Vorkehrungen getroffen, um einen Austritt des Fluors und der Reaktionsprodukte des Fluors mit dem Kunststoffmaterial - (insbesondere Fluorwasserstoff) in die Atmosphäre zu verhindern.

Aus den US-Patentschriften 39 88 491 und 40 20 223 sind Verfahren zur Fluorierung von faserförmigem Kunststoffmaterial auf der Basis von Polyamiden, Polyestern, Polyolefinen und Polyacrylnitrilen bekannt, bei welchem das faserförmige Kunststoffmaterial oberflächlich fluoriert wird, um dessen Feuchtigkeitstransporteigenschaften zu verbessern und um die Entfernung von Ölflecken zu erleichtern. Eine Verbesserung der Hafteigenschaften wird nicht bezweckt. Das Fasermaterial kann zur Fluorierung kontinuierlich durch eine abgedichtete Reaktionskammer geleitet werden, in der sich ein Gemisch aus Fluor und Trägergas befindet. Es ist jedoch nicht angegeben, wie dies bewerkstelligt wird. Ferner ist in einem Vergleichsbeispiel der US-PS 40 20 223 die Behandlung eines Polypropylenfilms neben der eines Polypropylengewebes angegeben, wobei der Film im Gegensatz zum Gewebe nach der Fluorierung visuell unverändert war, während die Einzelfasern des Gewebes unter den angegebenen Fluorierungsbedingungen vollständig miteinander verschweißt waren, so daß das Gewebe völlig unbrauchbar war. Daraus wurde der Schluß gezogen, daß keine Äquivalenz zwischen Filmen und Geweben aus Fasermaterial besteht. Schließlich finden sich auch keine Angaben darüber, wie weit die Oberflächenenergie des Kunststofffs verändert werden muß, um ausreichende Hafteigenschaften zu liefern.

Der Erfindung liegt die Aufgabe zugrunde, bei einem Verfahren zur Oberflächenbehandlung von flächigem Kunststoffmaterial mit gasförmigem Fluor, wobei das Kunststoffmaterial kontinuierlich durch eine mit einer verdünnten Fluoratmosphäre

gefüllte Reaktionskammer geleitet wird, die Oberfläche des Kunststoffmaterials in einer möglichst kurzen Zeit möglichst gleichmäßig zu behandeln, ohne daß störende Reaktionsprodukte hinterbleiben, und gleichzeitig ein Entweichen des Fluors und der Reaktionsprodukte in die äußere Atmosphäre zu verhindern.

Diese Aufgabe wird erfindungsgemäß dadurch gelöst, daß man ein bahnförmiges Kunststoffmaterial in Form von Folien oder Schaumstoffen freitragend durch die Reaktionskammer leitet und so lange fluoriert, bis seine Oberflächenenergie mindestens 45 mN/n beträgt, und daß man einen Austausch der verdünnten Fluoratmosphäre in der Reaktionskammer mit der äußeren Atmosphäre weitgehend verhindert.

Durch kurzzeitigen Kontakt mit dem elementaren Fluor wird die Oberfläche des Kunststoffmaterials chemisch so verändert, daß eine bleibende Erhöhung der Oberflächenenergie und damit eine lagerstabile Verbesserung des Haftvermögens bewirkt wird. Durch die freitragende Führung des bahnförmigen Kunststoffmaterials in der Reaktionskammer sind alle Oberflächen der gleichen Fluorkonzentration ausgesetzt, wodurch die Fluorierung gleichmäßiger wird. Aus diesem Grund kann auch eine verhältnismäßig hohe Fluorkonzentration angewendet werden, wodurch die Behandlungsdauer verkürzt werden kann. Wenn das Kunststoffmaterial freitragend in der Reaktionskammer geführt wird, braucht die Reaktionskammer keine besonderen Einbauten, z.B. Leitvorrichtungen, zu enthalten, die insbesondere bei hohen Fluorkonzentrationen korrodieren könnten.

Durdh die erfindungsgemäße Anhebung der Oberflächenenergie des Kunststoffmaterials wird eine ausgezeichnete Haftung zu anderen Polymeren, wie Lacken und Klebstoffen, erreicht.

Bevorzugte Oberflächenenergien liegen zwischen etwa 45 und 55 mN/m. Eine weitere Anhebung der Oberflächenenergie ist im allgemeinen nicht erforderlich, da die Haftung zu anderen Polymeren nur noch geringfügig zunimmt.

Die erfindungsgemäß erzielbare Verbesserung der Haftung war insbesondere bei Schaumstoffen überraschend. Es wurde festgestellt, daß zum Beispiel die Haftung von Klebstoffschichten an erfindungsgemäß fluorierten Schaumstoffen besser ist als an nicht fluorierten Schaumstoffen. Bei letzteren löst sich eine aufgebrachte Klebstoffschicht sofort wieder ab, obwohl man annehmen könnte, daß infolge der Oberflächenrauhigkeiten schon von vornherein eine gute mechanische Haftung vorliegen sollte.

Um den Austausch der verdünnten Fluoratmosphäre und der Reaktionsprodukte - (insbesondere Fluorwasserstoff) in der Reaktionskammer mit der äußeren Atmosphäre weitgehend zu verhindern, leitet man nach einer bevorzugten Ausführungsform der Erfindung das bahnförmige Kunststoffmaterial vor dem Eintritt in die Reaktionskammer und nach dem Austritt aus der Reaktionskammer durch Schleusenkammern, die der Reaktionskammer vor-bzw. nachgeschaltet sind, wobei in den Schleusenkammern gegebenenfalls Strömungswiderstände angeordnet sind.

Der Austritt des Fluors und der gasförmigen Reaktionsprodukte in die äußere Atmosphäre kann auch dadurch verhindert werden, daß man in die Schleusenkammern Inertgas einleitet. Das Inertgas strömt hierbei zum Teil in die Reaktionskammer und verhindert dadurch den Austritt des Fluors und der gasförmigen Reaktionsprodukte.

Es wurde ferner festgestellt, daß eine Erhöhung der Konzentration der gasförmigen Reaktionsprodukte, insbesondere des Fluorwasserstoffs nicht nur deshalb unerwünscht ist, weil sie nicht in die äußere Atmosphäre gelangen sollen, sondern auch deshalb, weil sie nicht an dem bahnförmigen Kunststoffmaterial adsorbiert bleiben sollen. Dies trifft insbesondere für die Schaumstoffe zu. Bei der Fluorierung diffundiert das Fluor auch in Schichten unterhalb der Oberfläche und reagiert dort unter Bildung von Fluorwasserstoff ab. Dieser diffundiert entsprechend der Partialdruck-Differenz zwischen Kunststoff und äußerer Atmosphäre mehr oder weniger schnell nach außen.

Wenn also in der Reaktionskammer ein verhältnismäßig hoher Fluorwasserstoff-Partialdruck herrscht, diffundiert der am Kunststoff adsorbierte bzw. darin gelöste Fluorwasserstoff nur langsam ab, d.h. er wird über einen längeren Zeitraum an die Atmosphäre abgegeben. Dies hat neben einer Geruchsbelästigung zur Folge, daß Gegenstände, mit denen das behandelte Kunststoffmaterial in Berührung kommt, korrodieren können, Außerdem wurde festgestellt, daß gewisse, auf den behandelten Kunststoff aufgebrachte Klebstoffe in Gegenwart von Spuren von Fluorwasserstoff vorzeitig aushärten können. Dies beruht wahrscheinlich darauf, daß der Fluorwasserstoff eine säurekatalytische Vernetzung der polymeren Molekülketten des Klebstoffes bewirkt.

Die Erfindung schlägt zur Lösung dieses Problems mehrere Maßnahmen vor, die allein oder in Kombination miteinander angewendet werden können.

So kann man das bahnförmige Kunststoffmaterial zum Beispiel vor dem Austritt aus der Reaktionskammer bzw. aus der dieser nachgeschalteten Schleusenkammer mit einem Inertgasstrahl beaufschlagen, um das Konzentrationsgefälle zwischen dem am Kunststoff adsorbierten bzw. darin gelösten Fluorwasserstoff und dem in der Atmosphäre befindlichne Fluorwasserstoff zu erhöhen.

Nach einer weiteren Verfahrensvariante kann man in der (den) Schleusenkammer(n) eine Inertgas-Ringströmung erzeugen, indem man Inertgas in der Nähe der Ein-bzw. Austrittsöffnung der Reaktionskammer in die Schleusenkammer(n) eindüst und im Umfangsbereich der Ringströmung ein Gemisch aus Inertgas und eingesaugter Außenluft aus der (den) Schleusenkammer(n) absaugt. Vorzugsweise stellt man das Volumenverhältnis zwischen dem in die Schleusenkammer eingedüsten Inertgas und der angesaugten Außenluft auf etwa 1 : 1 bis 1 : 400, vorzugsweise auf etwa 1 : 200 ein.

Diese Verfahrensvariante stellt eine nicht naheliegende Abwandlung des in der DE-OS 30 38 791 beschriebenen Verfahrens zum Trocknen von lösungsmittelhaltigem Material dar, wobei mit Hilfe der Inertgas-Ringströmung in der Schleusenkammer ein Austritt von Lösungsmitteldämpfen in die Atmosphäre verhindert werden soll.

Bei dieser Verfahrensvariante strömt ein Teil des Inertgases in die Reaktionskammer, wodurch nicht nur eine Entfernung des Fluorwasserstoffs von dem Kunststoffmaterial nach dem Austritt aus der Reaktionskammer, sondern auch der Austritt von Fluor und Fluorwasserstoff aus der Reaktionskammer verhindert wird.

Nach einer weiteren bevorzugten Ausführungsform kann der Austausch der verdünnten Fluoratmosphäre und der gasförmigen Reaktionsprodukte mit der äußeren Atmosphäre dadurch verhindert werden, daß man das bahnförmige Kunststoffmaterial zwischen Abdichtwalzen oder Abdichtlippen, die am Ein-und Ausgang der Reaktionskammer angeordnet sind, hindurchführt.

Nach einer weiteren bevorzugten Variante des erfindungsgemäßen Verfahrens kann die Konzentration der gasförmigen Reaktionsprodukte, wozu neben dem Fluorwasserstoff auch gasförmige fluorierte Kohlenwasserstoffe zählen, dadurch herabgesetzt werden, daß man die verdünnte Fluoratmosphäre kontinuierlich aus der Reaktionskammer entfernt und nach der Entfernung der durch Umsetzung des Fluors mit dem Kunststoffmaterial gebildeten Reaktionsprodukte und dem Ersatz des verbrauchten Fluors wieder in die Reaktionskammer zurückleitet, wobei man in der Reaktionskammer vorzugsweise ein Molverhältnis HF : $F_2$ von < 1 : 100 aufrechterhält. Vorzugsweise tauscht man hierbei das Gasvolumen in der Reaktionskammer etwa einmal pro Minute aus. Das Reaktorvolumen beträgt üblicherweise 0,1 bis 1 $m^3$. Die gasförmigen Reaktionsprodukte können hierbei entweder durch Auskondensieren oder durch Adsorption an einem gegenüber Fluor inerten Adsorptionsmittel aus der im Kreislauf geführten Fluoratmosphäre entfernt werden.

Vorzugsweise entfernt man den durch Umsetzung des Fluors mit dem Kunststoffmaterial gebildeten Fluorwasserstoff durch Absorption an einem Alkalifluorid aus der verdünnten Fluoratmosphäre und regeneriert das gebildete Alkalihydrogenfluorid (z.B. Na, H, $F_2$ oder $KHF_2$) durch Ausheizen.

Der hierbei abgetriebene Fluorwasserstoff kann beispielsweise auskondensiert oder durch Umsetzung mit z.B. Calciumhydroxid neutralisiert werden.

Das erfindungsgemäße Verfahren zeichnet sich dadurch aus, daß die Behandlung des bahnförmigen Kunststoffmaterials in einer Fluoratmosphäre mit einer verhältnismäßig hohen Fluorkonzentration durchgeführt werden kann. Beispielsweise kann die Fluorkonzentration 1 bis 70 Vol.-% betragen. Die Behandlung wird vorzugsweise bei Raumtemperatur über einen Zeitraum von weniger als 30 sek., vorzugsweise über einen Zeitraum von 10 bis 30 sek.,durchgeführt. In der Regel ist die Fluorkonzentration der Verweilzeit eines bestimmten bahnförmigen Kunststoffmaterials in der Reaktionskammer zur Erzielung einer bestimmten Oberflächenenergie umgekehrt proportional. Die erzielbare Oberflächenenergie hängt zusätzlich von der chemischen Beschaffenheit, der molekularen Struktur (kristallin oder amorph) bzw. der Oberflächenbeschaffenheit (glatte Folie bzw. Schaumstoff) des bahnförmigen Kunststoffmaterials ab. Wegen der extremen Reaktivität des Elements Fluor lassen sich prinzipiell alle polymeren Materialien die über substituierbare Wasserstoffatome verfügen, mit Fluor aktivieren.

Zur Verdünnung der Fluoratmosphäre verwendet man vorzugsweise Stickstoff oder Edelgase, insbesondere Helium, Neon und Argon. Zur Verdünnung eignet sich aber auch getrocknete Luft. Diese für die vorliegenden Zweck als "Inertgase" bezeichneten Gase können auch zur Einführung in die Schleusenkammern verwendet werden, um den Austritt des in der Reaktionskammer enthaltenen Gasgemisches in die freie Atmosphäre zu verhindern.

Das erfindungsgemäße Verfahren wird nachstehend anhand der Zeichnung erläutert. Es zeigen:

Fig. 1 eine schematische Ansicht einer Vorrichtung zur Durchführung des erfindungsgemäßen Verfahrens;

Fig. 2 eine Teilansicht der Vorrichtung von Fig. 1 mit Abdichtwalzen am Ein-bzw. Ausgang der Reaktionskammer.

Bei der in Fig. 1 dargestellten Ausführungsform wird das in Stahldruckflaschen bezogene Fluor in einer (nicht dargestellten) Entnahme-und Dosiervorrichtung mit Inertgas (Stickstoff, Edelgase oder getrockneter Preßluft) auf eine bestimmte Konzentration verdünnt. Diese Fluor/Inertgas-Mischung steht dem System über die Leitung 9 zur Verfügung. Nach dem Füllen der Reaktionskammer mit dem

Fluor/Inertgas-Gemisch wird dieses mittels der Pumpe 5 über die Leitung 6 und die beiden Absperrventile 7 und 8 durch die Reaktionskammer 2 im Kreislauf geführt, wobei das Ventil 13 geöffnet ist. Das bahnförmige Kunststoffmaterial wird über die Eintrittsschleuse 3 in die Kammer 2 eingebracht und verläßt die Kammer 2 über die Austrittsschleuse 4.

Über die Leitung 11 wird in die Schleusenkammern 3 und 4 Inertgas eingespeist, von dem ein Teil in die Reaktionskammer 2 strömt. Auf diese Weise sowie mit Hilfe der vorgeschalteten Strömungswiderstände 12 wird ein Übertritt von Fluor und Fluorwasserstoff in die äußere Atmosphäre weitgehend verhindert. Ein solches Schleusensystem ist beispielsweise in der DE-OS 30 38 791 näher beschrieben. Aus der Leitung 9 wird über das Dosierventil 10 der Anteil des Fluors ersetzt, der in erster Linie durch die chemische Umsetzung mit dem Kunststoffmaterial 1 als Fluorwasserstoff verlorengeht.

Bei der in Fig. 2 dargestellten Ausführungsform wird das bahnförmige Kunststoffmaterial 2 zwischen zwei Abdichtwalzen 14, 14' hindurchgeführt. Es sind nur die Abdicht walzen am Eingang in die Reaktionskammer 2 dargestellt. Entsprechdnde Abdichtwalzen können auch am Ausgang der Reaktionskammer 2 vorgesehen sein. Statt der Abdichtwalzen können auch Abdichtlippen aus einem elastischen, gegenüber Fluor beständigen Kunststoffmaterial (z.B. Polyäthylentetrafluorid) vorgesehen sein.

Man kann die Fluorwasserstoff-Spuren, die aus den Schleusenkammern 3 und 4 in die äußere Atmosphäre gelangen, durch einen hohen Frischluftdurchsatz auf einer Konzentration von < 0,1 ppm halten.

Üblicherweise wird der Fluorwasserstoff in der durch die Reaktionskammer 2 geleiteten Fluor/Inertgas-Mischung jedoch entweder kontinuierlich oder vorzugsweise periodisch aus dem Gemisch entfernt, so daß das Verhältnis HF : $F_2$ immer < 1 : 100 ist. Dies kann durch Einschaltung einer Adsorptions-oder Kondensationseinrichtung in die Umwälzleitung 6 geschehen.

In Fig. 1 ist eine Absorptionseinrichtung 15, die beispielsweise mit Natriumfluorid gefüllt sein kann, schematisch dargestellt. Die Gasmischung strömt nach dem Schließen des Ventils 13 durch den Absorber 15, wobei $NaHF_2$ gebildet wird. Nachdem die NaF-Charge im Absorber 15 erschöpft ist, wird dieser mit Hilfe einer elektrischen Heizspirale 16 auf eine Temperatur von etwa 300°C erwärmt und das Ventil 17 geöffnet, so daß der desorbierte Fluorwasserstoff aus dem System entfernt und zum Beispiel in einem Neutralisationsbehälter (nicht dargestellt) neutralisiert werden kann.

Im Vergleich zu anderen Vorbehandlungsverfahren zeichnet sich das erfindungsgemäße Verfahren nicht nur durch ein breites Anwendungsspektrum aus; es benötigt auch keine störanfälligen und wartungsintensiven elektrischen Apparaturen, wie sie für die Corona-Vorbehandlung und die Ozonisierung erforderlich sind. Weiterhin ist die Grundinvestition für Fluorarmaturen (Entnahmestation) und für eine Reaktionskammer im Vergleich zu den Anschaffungskosten einer Corona-Vorbehandlungsstation niedrig.

Mit Hilfe des erfindungsgemäßen Verfahrens kann ein bahnförmiges Kunststoffmaterial, das in einer kompakten Rolle gewickelt ist, der Fluorierung unterzogen werden, und zwar unabhängig von der Rollenlänge.

Das erfindungsgemäße Verfahren zeichnet sich auch dadurch aus, daß der Oberflächenbehandlungseffekt im Gegensatz zur Corona-Vorbehandlung beidseitig und irreversibel ist. Das ist für die industrielle Praxis von enormer Bedeutung, weil nachfolgende Oberflächenveredelungsprozesse nicht unmittelbar auf die Oberflächenaktivierung folgen müssen.

Die Erfindung ist durch das nachstehende Beispiel näher erläutert.

Beispiel

Oberflächenbehandlung einer Schaumstoffbahn mit Fluor

Bei der Schaumstoffbahn handelt es sich um einen geschlossenzelligen Polyäthylen/Vinylacetat-Copolymerschaum mit einer Dicke von 1 mm. Dieser Schaumstoff wird mit einer Geschwindigkeit von 4 m/min. durch eine mit einem Fluor/Stickstoffgemisch (30 Volumteile Fluor, 70 Volumteile Stickstoff) beschickte Reaktionskammer geführt, die eine Eintritts-und Austrittsschleuse gemäß Fig. 1 besitzt. Es werden etwa 20 m³ Stickstoff pro Betriebsstunde benötigt. Das $N_2/F_2$-Gemisch wird so umgewälzt, daß der gewünschte Fluorierungsgrad erzielt wird. Die Länge der Kammer beträgt etwa 2 m, die Breite etwa 1,4 m. Die Verweilzeit der Schaumstoffbahn beträgt also nur etwa 30 s.

Nach dem Passieren der Fluoratmosphäre steigt die Oberflächenspannung des Schaumstoffmaterials von 30 mN/m auf 54 mN/m an. Wird der Schaumstoff z.B. als Trägermaterial für doppelseitige Haftklebebänder eingesetzt, so findet man eine ebenso gute Kleberverankerung wie für ein mit einer Coronaentladung vorbehandeltes Material. Dies verdeutlicht die nachfolgende Tabelle

| Schaumstoff | Oberflächen-spannung mN/m | Pebra-Test[1)] | Stempeltest[2)] N/625 $mm^2$ |
|---|---|---|---|
| unvorbehandelt | < 30 | 3 s | 99 |
| coronavorbehandelt | ca. 50 | >2 min | 129 - 149 |
| fluorvorbehandelt | 54 | >2 min | 133 |

1) Testvorschrift AW 14 der Fa. Pebra

Durchführung:

1. Zwei eloxierte Al-Streifen mit dem Querschnitt von 30 $\times$ 2 $mm^2$ werden vor jeder Klebung mit Feuerzeugbenzin gereinigt.
2. Ein etwa 35 mm langes Klebebandstück quer zur Längsrichtung des Al-Streifens kleben, leicht von Hand andrücken und überstehende Enden abschneiden.
3. Oberen Prüfstreifen ankleben und leicht andrücken.
4. Klebeverbindung in Presse einmal andrücken.
6. Klebeverbindung zum Temperieren für 60 sek. in Heizkammer mit 70°C einhängen.
7. Klebeverbindung in Heizkammer einhängen.
8. Nach 60 sek. Belastungsgewicht mit 1800 g anhängen und Stoppuhr anlaufen lassen.
9. Zeit bis zum Bruch der Probe bestimmen und eintragen. Die Mindest-Hängezeit beträgt 1 min.
10. Die Prüfung ist pro Rolle an fünf verschiedenen Stellen vorzunehmen.

2) Testvorschrift der Anmelderin

Durchführung

a) Vorbereitung der Teile zur Prüfung

| | |
|---|---|
| Prüfmaschine | Zugmaschine nach DIN 51221 |
| 2 Prüfkörper | Aluminiumstempel |
| Klebeband | 12 mm breit, 40 mm lang |
| Reinigungsmittel | Feuerzeug-Benzin BP |

Die Oberflächen der 2 mit Benzin gereinigten Prüfkörper werden sorgfältig miteinander verklebt. Das überstehende Band wird vor dem Aufkleben des zweiten Prüfkörpers abgeschnitten. Die Einspann-Enden müssen genau senkrecht zueinander ausgerichtet sein.

Sofort nach der Klebung (Zusammenfügen erfolgt mit einer Handpresse (P = 10 kp, t = 1 min) werden beide Enden in die Backen der Zugprüfmaschine eingespannt und bei einer Abzugsgeschwindigkeit von 50 mm/min bis zum Bruch der Klebung auseinandergezogen.

b) Prüfkriterium

Haftfestigkeit mindestens 5 $kpcm^{-2}$

Da die Eigenfestigkeit größer sein muß als die Klebkraft, darf eine Spaltung des Trägermaterials nicht entstehen, auch nicht unter Höchstkraft. Der Abriß hat zwischen Kleber und Prüfkörper zu erfolgen.

Die lagerstabile Aktivierung des in diesem Beispiel ausgewählten Schaumstoffs wird vorwiegend auf die Teilfluorierung der endständigen CH3-Gruppe des Comonomeren Vinylacetat zurückgeführt:

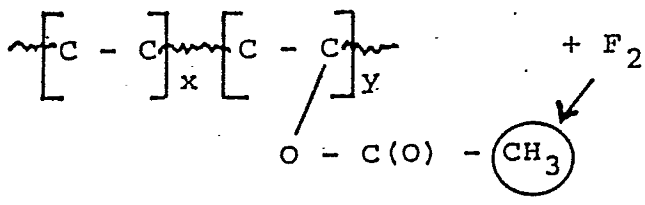

Das erfindunsgemäße Verfahren ist nicht auf das als Beispiel gewählte Material beschränkt. Es können Abwandlungen vorgenommen werden, ohne daß der Rahmen der Erfindung verlassen wird. Beispielsweise können mit dem erfindungsgemäßen Verfahren auch Haftklebeschichten mit Fluor behandelt werden, wodurch eine bessere Benetzung der Flächen und eine preiswertere Herstellung erzielt wird.

## Ansprüche

1. Verfahren zur Oberflächenbehandlung von flächigem Kunststoffmaterial mit gasförmigem Fluor, wobei das Kunststoffmaterial kontinuierlich durch eine mit einer verdünnten Fluoratmosphäre gefüllte Reaktionskammer geleitet wird, dadurch gekennzeichnet, daß man ein bahnförmiges Kunststoffmaterial in Form von Folien oder Schaumstoffen freitragend durch die Reaktionskammer leitet und so lange fluoriert, bis seine Oberflächenenergie mindestens 45 mN/m beträgt und daß man einen Austausch der verdünnten Fluoratmosphäre in der Reaktionskammer mit der äußeren Atmosphäre weitgehend verhindert.

2. Verfahren nach Anspruch 1, dadurch gekennzeichnet, daß man das bahnförmige Kunststoffmaterial vor dem Eintritt in die Reaktionskammer und nach dem Austritt aus der Reaktionskammer durch Schleusenkammern leitet, die der Reaktionskammer vor-bzw. nachgeschaltet sind, wobei in den Schleusenkammern gegebenenfalls Strömungswiderstände angeordnet sind.

3. Verfahren nach Anspruch 2, dadurch gekennzeichnet, daß man in die Schleusenkammern Inertgas einleitet.

4. Verfahren nach Anspruch 2 und 3, dadurch gekennzeichnet, daß man das bahnförmige Kunststoffmaterial vor dem Austritt aus der Reaktionskammer bzw. aus der dieser nachgeschalteten Schleusenkammer mit einem Inertgasstrahl beaufschlagt.

5. Verfahren nach einem der Ansprüche 2 bis 4, dadurch gekennzeichnet, daß man in der (den) Schleusenkammer(n) eine Inertgas-Ringströmung erzeugt, indem man Inertgas in der Nähe der Ein- bzw. Austrittsöffnung der Reaktionskammer in die Schleusenkammer(n) eindüst und im Umfangsbereich der Ringströmung ein Gemisch aus Inertgas und angesaugter Außenluft aus der (den) Schleusenkammer(n) absaugt.

6. Verfahren nach Anspruch 5, dadurch gekennzeichnet, daß man das Volumenverhältnis zwischen dem in die Schleusenkammer(n) eingedüsten Inertgas der angesaugten Außenluft auf etwa 1 : 1 bis 1 : 400, vorzugsweise auf etwa 1 : 200, einstellt.

7. Verfahren nach einem der Ansprüche 1 bis 6, dadurch gekennzeichnet, daß man das bahnförmige Kunststoffmaterial zwischen Abdichtwalzen oder Abdichtlippen, die am Ein-und Ausgang der Reaktionskammer angeordnet sind, hindurchführt.

8. Verfahren nach einem der Ansprüche 1 bis 7, dadurch gekennzeichnet, daß man die verdünnte Fluoratmosphäre kontinuierlich aus der Reaktionskammer entfernt und nach der Entfernung der durch Umsetzung des Fluors mit dem Kunststoffmaterial gebildeten Reaktionsprodukte und dem Ersatz des verbrauchten Fluors wieder in die Reaktionskammer zurückleitet, wobei man in der Reaktionskammer ein Molverhältnis HF : $F_2$ von $< 1 : 100$ aufrechterhält.

9. Verfahren'nach einem der Ansprüche 1 bis 8, dadurch gekennzeichnet, daß man das Gasvolumen in der Reaktionskammer etwa einmal pro Minute austauscht.

10. Verfahren nach einem der Ansprüche 1 bis 9, dadurch gekennzeichnet, daß man den zur Umsetzung des Fluors mit dem Kunststoffmaterial gebildeten Fluorwasserstoff durch Absorption an einem Alkalifluorid aus der verdünnten Fluoratmosphäre entfernt und das Gebilde des Alkalihydrogenfluorids durch Ausheizen regeneriert.

11. Verfahren nach einem der Ansprüche 1 bis 10, dadurch gekennzeichnet, daß man die Behandlung des bahnförmigen Kunststoffmaterials in einer verdünnten Fluoratmosphäre mit einer Fluorkonzentration von 1 bis 70 Vol.-% durchführt.

12. Verfahren nach einem der Ansprüche 1 bis 11 , dadurch gekennzeichnet, daß man die Behandlung bei Raumtemperatur über einen Zeitraum von weniger als 30 Sek., vorzugsweise über einen Zeitraum von 10 bis 30 Sek., durchführt.

13. Verfahren nach einem der Ansprüche 1 bis 12, dadurch gekennzeichnet, daß man zur Verdünnung des Fluors bzw. als Inertgas getrocknete Luft, Stickstoff oder Edelgase verwendet.

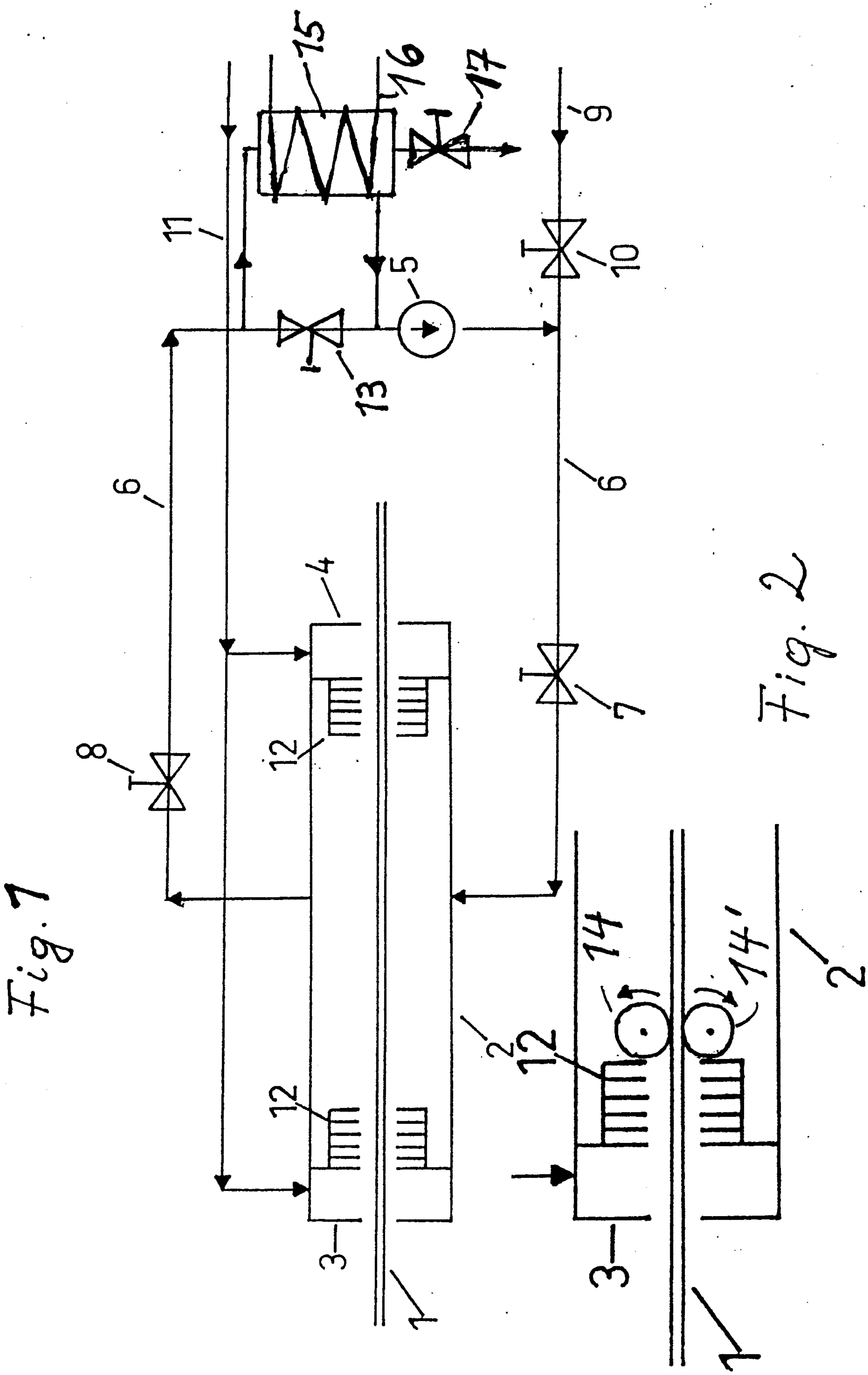

Fig. 1

Fig. 2